(19) **Europäisches Patentamt**
**European Patent Office**
**Office européen des brevets**

(11) **EP 4 654 299 A1**

(12) **EUROPEAN PATENT APPLICATION**

(43) Date of publication:
26.11.2025 Bulletin 2025/48

(21) Application number: 25171386.3

(22) Date of filing: 17.04.2025

(51) International Patent Classification (IPC):
*H01M 4/58* (2010.01)   *H01M 4/02* (2006.01)

(52) Cooperative Patent Classification (CPC):
**H01M 4/5825; H01M 2004/028**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 29.04.2024 KR 20240056940

(71) Applicant: SAMSUNG SDI CO., LTD.
**Yongin-si, Gyeonggi-do 17084 (KR)**

(72) Inventors:
• **DOO, Sungwook**
  **Yongin-si (KR)**
• **KIM, Young-Ki**
  **Yongin-si (KR)**
• **CHOI, Aram**
  **Yongin-si (KR)**
• **KIM, Sangmi**
  **Yongin-si (KR)**
• **KANG, Gwiwoon**
  **Yongin-si (KR)**

(74) Representative: **Marks & Clerk LLP**
**15 Fetter Lane**
**London EC4A 1BW (GB)**

(54) **POSITIVE ELECTRODE ACTIVE MATERIAL FOR RECHARGEABLE LITHIUM BATTERY, POSITIVE ELECTRODE INCLUDING THE SAME, AND RECHARGEABLE LITHIUM BATTERY INCLUDING THE SAME**

(57)   A positive electrode for a rechargeable lithium battery includes a current collector, a first active material layer on the current collector, and a second active material layer on the first active material layer. The first active material layer includes a first particle that may be in the form of a single particle, and the second active material layer includes a second particle that may be in the form of a secondary particle. The first particle includes a compound of Formula 1, and the second particle includes a compound of Formula 2. Also disclosed is a rechargeable lithium battery including the same.

FIG. 6

10

**Description**

**BACKGROUND**

**1. Field**

The present invention relates to a positive electrode active material for a rechargeable lithium battery, a positive electrode including the positive active material, and a rechargeable lithium battery including the positive electrode. More particularly, the present invention relates to a positive electrode active material including an olivine-based lithium compound, a positive electrode including the positive active material, and a rechargeable lithium battery including the positive electrode.

**2. Description of the Related Art**

Recently, the rapid spread (proliferation) of battery-powered electronics (such as mobile phones and laptop computers) and/or electric vehicles, has significantly increased the demand for rechargeable batteries, specifically rechargeable lithium batteries with relatively high energy densities and/or high capacities. Consequently, extensive research efforts are focused on enhancing (are directed towards improving) the performance of rechargeable lithium batteries.

Rechargeable lithium batteries may include a positive electrode and a negative electrode, each including an active material that allows intercalation and deintercalation of lithium ions, and an electrolyte solution. These batteries generate electrical energy through redox reactions that take place as lithium ions are intercalated into or deintercalated from the positive electrode and the negative electrode.

The above information disclosed in this Background section is only for enhancement of understanding of the background of the disclosure and therefore it may contain information that does not constitute prior art.

**SUMMARY**

The present invention provides a positive electrode active material having high energy density, high operating voltage, and high conductivity.

The present invention also provides a rechargeable lithium battery having high energy density, high operating voltage, and high low-temperature properties.

Additional aspects will be set forth in part in the description which follows and, in part, will be apparent from the description, or may be learned by practice of the presented embodiments of the disclosure.

In a first aspect, the present invention provides a positive electrode for a rechargeable lithium battery, including a current collector, a first active material layer on the current collector, and a second active material layer on the first active material layer. The first active material layer includes a first particle in the form of a single particle (e.g., a monolithic particle), and the second active material layer includes a second particle in the form of a secondary particle (e.g., not a single particle or in the form of secondary particles in each of which at least two primary particles are aggregated (e.g., agglomerated)). The first particle contains (includes) a compound of Formula 1, and the second particle contains (includes) a compound of Formula 2.

$$\text{Formula 1} \qquad Li_{a1}Fe_{x1}B1_{y1}PO_{4-b1}$$

In Formula 1, $0.8 \leq a1 \leq 1.2$, $0.95 \leq x1 \leq 0.999$, $0.001 \leq y1 \leq 0.05$, $0 \leq b1 \leq 0.05$, and $x1 + y1 = 1$ are satisfied. In Formula 1, B1 is at least one element selected from the group consisting of Ti, Mg, V, Nb, and Al.

$$\text{Formula 2} \qquad Li_{a2}Fe_{x2}B2_{y2}PO_{4-b2}$$

In Formula 2, $0.8 \leq a2 \leq 1.2$, $0.95 \leq x2 \leq 0.999$, $0.001 \leq y2 \leq 0.05$, $0 \leq b2 \leq 0.05$, and $x2 + y2 = 1$ are satisfied. In Formula 2, B2 is at least one element selected from the group consisting of Ti, Mg, V, and Al.

In a second aspect the present invention provides a positive electrode for a rechargeable lithium battery including a current collector, a first active material layer on the current collector, and a second active material layer on the first active material layer. The first active material layer includes a first particle, a first binder, and a first conductive material, and the second active material layer includes a second particle, a second binder, and a second conductive material, The content (e.g., amount) of the first binder included in the first active material layer may be greater than the content (e.g., amount) of the second binder included in the second active material layer. The first particle contains (includes) a compound of Formula 1, and the second particle contains (includes) a compound of Formula 2.

Formula 1 $\quad\quad Li_{a1}Fe_{x1}B1_{y1}PO_{4-b1}$

In Formula 1, $0.8 \leq a1 \leq 1.2$, $0.95 \leq x1 \leq 0.999$, $0.001 \leq y1 \leq 0.05$, $0 \leq b1 \leq 0.05$, and $x1 + y1 = 1$ is satisfied. In Formula 1, B1 is at least one element selected from the group consisting of Ti, Mg, V, Nb, and Al.

Formula 2 $\quad\quad Li_{a2}Fe_{x2}B2_{y2}PO_{4-b2}$

In Formula 2, $0.8 \leq a2 \leq 1.2$, $0.95 \leq x2 \leq 0.999$, $0.001 \leq y2 \leq 0.05$, $0 \leq b2 \leq 0.05$, and $x2 + y2 = 1$ is satisfied. In Formula 2, B2 is at least one element selected from the group consisting of Ti, Mg, V, Nb, and Al.

In a third aspect the present invention provides a rechargeable lithium battery including either of the aforementioned positive electrodes described above.

At least some of the above and other features of the invention are set out in the claims.

## BRIEF DESCRIPTION OF THE DRAWINGS

The accompanying drawings are included to provide a further understanding of the present disclosure, and are incorporated in and constitute a part of this specification. The drawings illustrate embodiments of the present disclosure and, together with the description, serve to explain principles of the present disclosure. In the drawings:

FIG. 1 is a simplified conceptual view showing a rechargeable lithium battery according to one or more embodiments of the present disclosure;

FIGS. 2-5 are schematic views each showing a rechargeable lithium battery according to one or more embodiments of the present disclosure, and FIG. 2 shows a cylindrical battery, FIG. 3 shows a prismatic battery, and FIGS. 4 and 5 show pouch-type (kind) batteries;

FIG. 6 is a cross-sectional view showing a positive electrode for a rechargeable lithium battery according to one or more embodiments of the present disclosure;

FIG. 7 is an enlarged view showing a first active material layer of a positive electrode for a rechargeable lithium battery according to one or more embodiments of the present disclosure;

FIG. 8 is an enlarged view showing a second active material layer of a positive electrode for a rechargeable lithium battery according to one or more embodiments of the present disclosure;

FIGS. 9A and 9B are a pair of scanning electron microscope (SEM) images showing a first particle prepared in Preparation Example 1 according to embodiments of the present disclosure; and

FIG. 10 is a pair of SEM images showing a second particle prepared in Preparation Example 2 according to embodiments of the present disclosure.

## DETAILED DESCRIPTION

The present disclosure may be modified in many alternate forms, and thus specific embodiments will be illustrated in the drawings and described in more detail. It should be understood, however, that this is not intended to limit the present disclosure to the particular forms disclosed, but rather, is intended to cover all modifications, equivalents, and alternatives falling within the scope of the present disclosure.

Hereinafter, example embodiments will be described in more detail with reference to the accompanying drawings. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described.

It will be understood that when an element, such as an area, layer, film, region or portion, is referred to as being "on" another element, it can be directly on the other element, or one or more intervening elements may be present. In contrast, when an element or layer is referred to as being "directly on," or "immediately adjacent to" another element or layer, there are no intervening elements or layers present. In addition, it will also be understood that when an element is referred to as being "between" two elements, it can be the only element between the two elements, or one or more intervening elements may also be present.

In the drawings, thicknesses of some components may be exaggerated for clarity and/or for effectively explaining the technical contents. Unless otherwise noted, like reference numerals refer to like elements throughout, and duplicative descriptions thereof may not be provided.

As used herein, the singular forms "a," "an" and "the" are intended to include the plural forms as well, unless the context clearly indicates otherwise. In addition, unless otherwise specially noted, the phrase "A or B" may indicate "A but not B", "B but not A", and "A and B". Unless otherwise apparent from the disclosure, expressions such as "at least one of," "a plurality of," "one of," and other prepositional phrases, when preceding a list of elements, should be understood as including the disjunctive if written as a conjunctive list and vice versa. For example, the expressions "at least one of a, b, or c," "at least one of a, b, and/or c," "one selected from the group consisting of a, b, and c," "at least one selected from among a, b, and c," "at least one from among a, b, and c," "one from among a, b, and c", "at least one of a to c" indicates only a, only b, only c, both a and b, both a and c, both b and c, all of a, b, and c, or variations thereof.

It will be further understood that the terms "comprises," "comprising," "includes," "including," "have," "having," "contain," and "containing," when used in this specification, specify the presence of the stated features, integers, steps, operations, elements, and/or components, but do not preclude the presence or addition of one or more other features, integers, steps, operations, elements, components, and/or groups thereof.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the scope of the present disclosure.

As used herein, the term "combination thereof" may refer to a mixture, a stack, a composite, a copolymer, an alloy, a blend, and/or a reaction product.

As used herein, the term "and/or" includes any and all combinations of one or more of the associated listed items.

As used herein, the terms "use," "using," and "used" may be considered synonymous with the terms "utilize," "utilizing," and "utilized," respectively.

Unless otherwise especially defined in this description, a particle diameter may be an average particle diameter. In the present disclosure, when particles are spherical, "diameter" indicates a particle diameter or an average particle diameter, and when the particles are non-spherical, the "diameter" indicates a major axis length or an average major axis length. In addition, a particle diameter indicates an average particle diameter ($D_{50}$) whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size. The average particle diameter ($D_{50}$) may be measured by a method generally utilized and/or generally available to those skilled in the art, for example, by a particle size analyzer, a transmission electron microscope (TEM) image, or a scanning electron microscope (SEM) image. In one or more embodiments, a dynamic light-scattering measurement device is used to perform a data analysis, the number of particles is counted for each particle size range, and then from this, the average particle diameter ($D_{50}$) value may be obtained through a calculation. In one or more embodiments, a laser diffraction method may be utilized to measure the average particle diameter ($D_{50}$). In the laser diffraction method, a target particle is distributed in a distribution solvent, introduced into a laser diffraction particle-diameter measurement device (e.g., MT3000 commercially available from Microtrac, Inc), irradiated with ultrasonic waves of 28 kHz at a power of 60 W, and then an average particle diameter ($D_{50}$) is calculated in the 50% standard of particle diameter distribution in the measurement device.

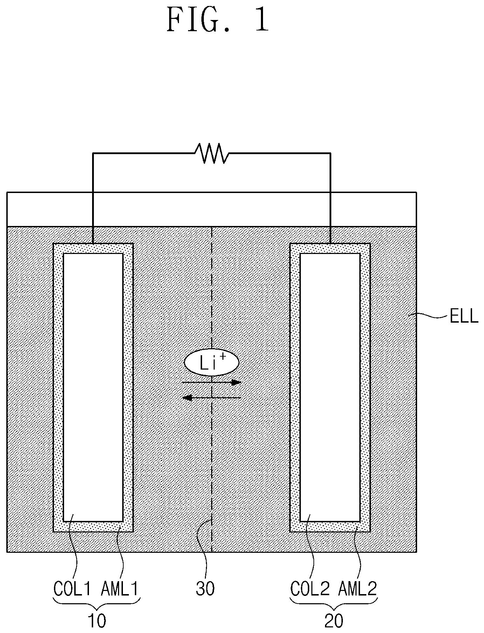

FIG. 1 is a cross-sectional view of a rechargeable lithium battery according to one or more embodiments of the present disclosure. Referring to FIG. 1, the rechargeable lithium battery may include a positive electrode 10, a negative electrode 20, a separator 30, and an electrolyte solution ELL.

The positive electrode 10 and the negative electrode 20 may be spaced and/or apart (e.g., spaced apart or separated) from each other by the separator 30. The separator 30 may be arranged between the positive electrode 10 and the negative electrode 20. The positive electrode 10, the negative electrode 20 and the separator 30 may be in contact with the electrolyte solution ELL. The positive electrode 10, the negative electrode 20 and the separator 30 may be impregnated in the electrolyte solution ELL.

The electrolyte solution ELL may be a medium for transferring lithium ions between the positive electrode 10 and the negative electrode 20. In the electrolyte solution ELL, the lithium ions may move through the separator 30 toward the positive electrode 10 or the negative electrode 20.

## Positive Electrode 10

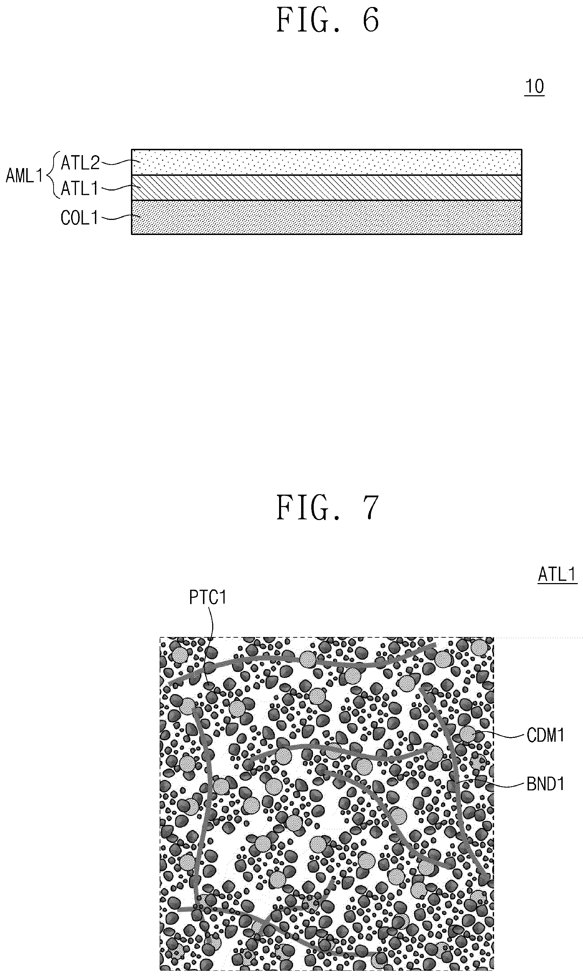

The positive electrode 10 for a rechargeable lithium battery includes a current collector COL1 and a positive electrode active material layer AML1 formed on the current collector COL1. The positive electrode active material layer AML1 includes a positive electrode active material, and may further include a binder and/or a conductive material (e.g., an electron conductor or electrically conductive material). The positive electrode 10 according to one or more embodiments of the present disclosure will be described in more detail with reference to FIG. 6. Aluminium (Al) may be used for the current collector COL1, but the present disclosure is not limited thereto.

## Negative Electrode 20

The negative electrode 20 for a rechargeable lithium battery may include a current collector COL2 and a negative electrode active material layer AML2 on the current collector COL2. The negative electrode active material layer AML2 may include a negative electrode active material, and may further include a binder and/or a conductive material (e.g., an electron conductor or electrically conductive material).

For example, the negative electrode active material layer AML2 may include about 90 wt% to about 99 wt% of the negative electrode active material, about 0.5 wt% to about 5 wt% of the binder, and about 0 wt% to about 5 wt% of the conductive material.

The binder may serve to attach (effectively attach) the negative electrode active material particles to each other and also to attach (effectively attach) the negative electrode active material to the current collector COL2. The binder may include a non-aqueous binder, an aqueous binder, a dry binder, and/or a (e.g., any suitable) combination thereof.

The non-aqueous binder may include polyvinyl chloride, carboxylated polyvinyl chloride, polyvinyl fluoride, an ethylene-propylene copolymer, polystyrene, polyurethane, polytetrafluoroethylene, polyvinylidene fluoride, polyethylene, polypropylene, poly amideimide (polyamide-imide (PAI)), polyimide, and/or a (e.g., any suitable) combination thereof.

The aqueous binder may be selected from among a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene-propylene-diene copolymer, polyvinylpyridine, chlorosulfonated polyethylene, latex, a polyester resin, a (meth)acrylic resin, a phenol resin, an epoxy resins, polyvinyl alcohol, and/or a (e.g., any suitable) combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, and/or a (e.g., any suitable) combination thereof.

The conductive material may be used to impart conductivity (e.g., electrical conductivity) to the electrode. Any material that does not cause chemical change (e.g., does not cause an undesirable chemical change in the rechargeable lithium battery) and that conducts electrons can be used in the battery. Non-limiting examples thereof may include a carbon-based material such as natural graphite, artificial graphite, carbon black, acetylene black, ketjen black, a carbon fiber, a carbon nanofiber, and/or a carbon nanotube; a metal-based material including copper, nickel, aluminium, silver, and/or the like, in a form of a metal powder or a metal fiber; a conductive polymer such as a polyphenylene derivative; and/or a (e.g., any suitable) mixture thereof.

The negative current collector COL2 may include a copper foil, a nickel foil, a stainless steel foil, a titanium foil, a nickel foam, a copper foam, a polymer substrate coated with a conductive metal, and/or a (e.g., any suitable) combination thereof.

## Negative Electrode Active Material

The negative electrode active material may include a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example. crystalline carbon, amorphous carbon and/or a (e.g., any suitable) combination thereof. The crystalline carbon may be graphite such as non-shaped, sheet-shaped, flake-shaped, sphere-shaped, and/or fiber-shaped natural graphite or artificial graphite. The amorphous carbon may be a soft carbon, a hard carbon, a mesophase pitch carbonization product, calcined coke, and/or the like.

The lithium metal alloy includes an alloy of lithium and a metal selected from among Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may include silicon, a silicon-carbon composite, $SiO_x$ ($0 < x \leq 2$), a Si-Q alloy (where Q is selected from among an alkali metal, an alkaline-earth metal, a Group 13 element, a Group 14 element (excluding Si), a Group 15 element, a Group 16 element, a transition metal, a rare earth element, and/or a (e.g., any suitable) combination thereof). The Sn-based negative electrode active material may include Sn, $SnO_x$ ($0 < x \leq 2$, e.g., $SnO_2$), a Sn-based alloy, and/or a (e.g., any suitable) combination thereof.

The silicon-carbon composite may be a composite of silicon and amorphous carbon. According to one or more embodiments, the silicon-carbon composite may be in a form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

## Separator 30

Depending on the type (kind) of the rechargeable lithium battery, the separator 30 may be present between the positive electrode 10 and the negative electrode 20. The separator 30 may include polyethylene, polypropylene, polyvinylidene fluoride, or a multilayer film of two or more layers thereof, and/or a mixed multilayer film such as a polyethylene/polypropylene two-layer separator, polyethylene/polypropylene/polyethylene three-layer separator, polypropylene/polyethylene/polypropylene three-layer separator, and/or the like.

The separator 30 may include a porous substrate and a coating layer including an organic material, an inorganic material, and/or a (e.g., any suitable) combination thereof on a surface (e.g., one or both surfaces (e.g., opposite surfaces)) of the porous substrate.

The porous substrate may be a polymer film formed of any one selected polymer selected from among a polyolefin (such as polyethylene and/or polypropylene), polyester (such as polyethylene terephthalate and/or polybutylene terephthalate), polyacetal, polyamide, polyimide, polycarbonate, polyether ketone, polyarylether ketone, polyetherimide, polyamideimide, polybenzimidazole, polyether sulfone, polyphenylene oxide, a cyclic olefin copolymer, polyphenylene sulfide, polyethylene naphthalate, a glass fiber, and polytetrafluoroethylene (e.g., TEFLON), and/or a copolymer or mixture of two or more thereof.

The organic material may include a polyvinylidene fluoride-based polymer or a (meth)acrylic polymer.

The inorganic material may include inorganic particles selected from among $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and/or a (e.g., any suitable) combination thereof, but the present disclosure is not limited thereto.

The organic material and the inorganic material may be mixed in one coating layer, or a coating layer including an organic material and a coating layer including an inorganic material may be stacked.

## Electrolyte Solution ELL

The electrolyte solution ELL for a rechargeable lithium battery may include a non-aqueous organic solvent and a lithium salt.

The non-aqueous organic solvent may serve as a medium for transmitting ions taking part in the electrochemical reaction of a battery.

The non-aqueous organic solvent may be a carbonate-based, ester-based, ether-based, ketone-based, or alcohol-based solvent, an aprotic solvent, and/or a (e.g., any suitable) combination thereof.

The carbonate-based solvent may include dimethyl carbonate (DMC), diethyl carbonate (DEC), dipropyl carbonate (DPC), methyl propyl carbonate (MPC), ethyl propyl carbonate (EPC), methyl ethyl carbonate (MEC), ethylene carbonate (EC), fluoroethylene carbonate (FEC), propylene carbonate (PC), butylene carbonate (BC), and/or the like.

The ester-based solvent may include methyl acetate, ethyl acetate, n-propyl acetate, dimethyl acetate, methyl propionate, ethyl propionate, decanolide, mevalonolactone, valerolactone, caprolactone, and/or the like.

The ether-based solvent may include dibutyl ether, tetraethylene glycol dimethyl ether (tetraglyme), bis(2-methoxyethyl) ether (diglyme), dimethoxyethane, 2-methyltetrahydrofuran, 2,5-dimethyltetrahydrofuran, tetrahydrofuran, and/or the like. In one or more embodiments, the ketone-based solvent may include cyclohexanone, and/or the like. The alcohol-based solvent may include ethanol, isopropyl alcohol, and/or the like and the aprotic solvent may include nitriles such as R-CN (wherein R is a C2 to C20 linear, branched, or cyclic hydrocarbon group, a double bond, an aromatic ring, or an ether bond), and/or the like; amides such as dimethylformamide; dioxolanes such as 1,3-dioxolane, 1,4-dioxolane, and/or the like; sulfolanes, and/or the like.

The non-aqueous organic solvents may be used alone or in combination of two or more.

In one or more embodiments, if (e.g., when) using a carbonate-based solvent, a cyclic carbonate and a chain carbonate may be mixed and used, and the cyclic carbonate and the chain carbonate may be mixed in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one selected from among $LiPF_6$, $LiBF_4$, $LiSbF_6$, $LiAsF_6$, $LiClO_4$, $LiAlO_2$, $LiAlCl_4$, $LiPO_2F_2$, $LiCl$, $LiI$, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO2)(C_yF_{2y+1}SO_2)$ (wherein x and y are integers of 1 to 20), lithium trifluoromethane sulfonate, lithium tetrafluoroethanesulfonate, lithium difluoro(oxalato)borate (LiDFOB), lithium difluorobis(oxalato)phosphate (LiDFBOP), and/or lithium bis(oxalato)borate (LiBOB).

**Rechargeable Lithium Battery**

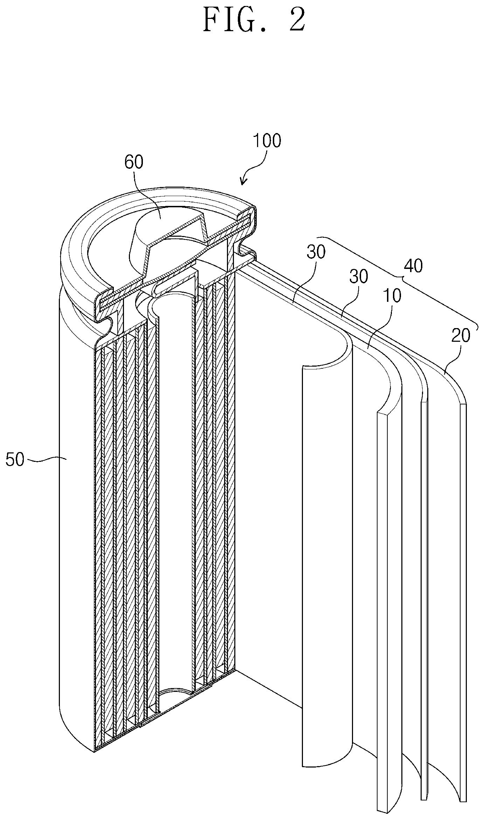

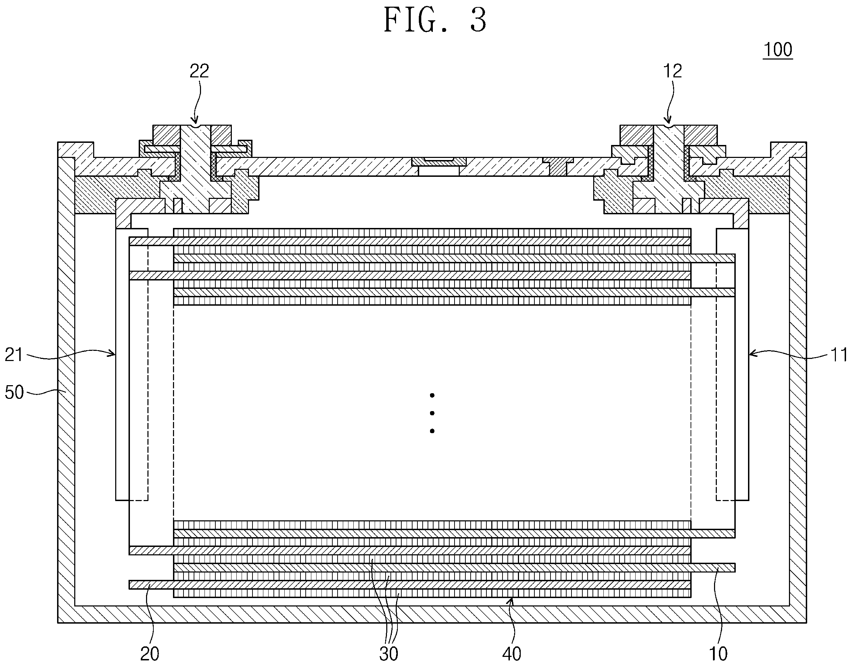

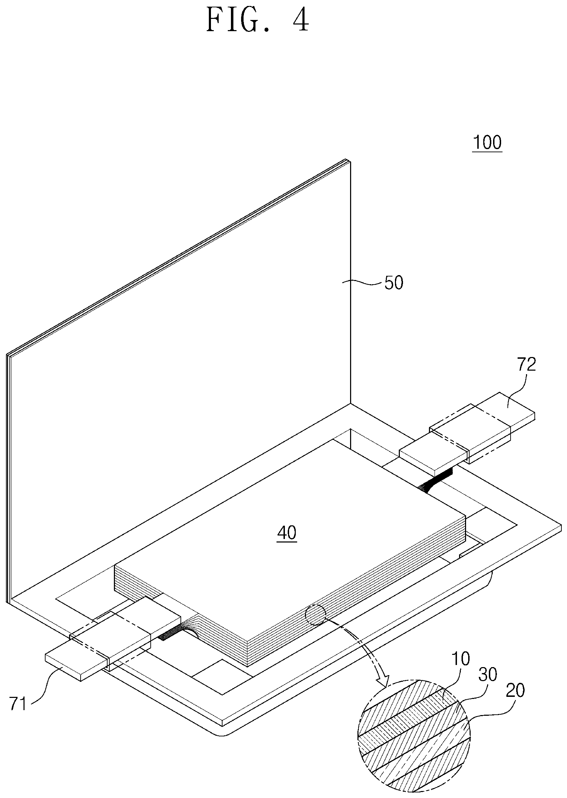

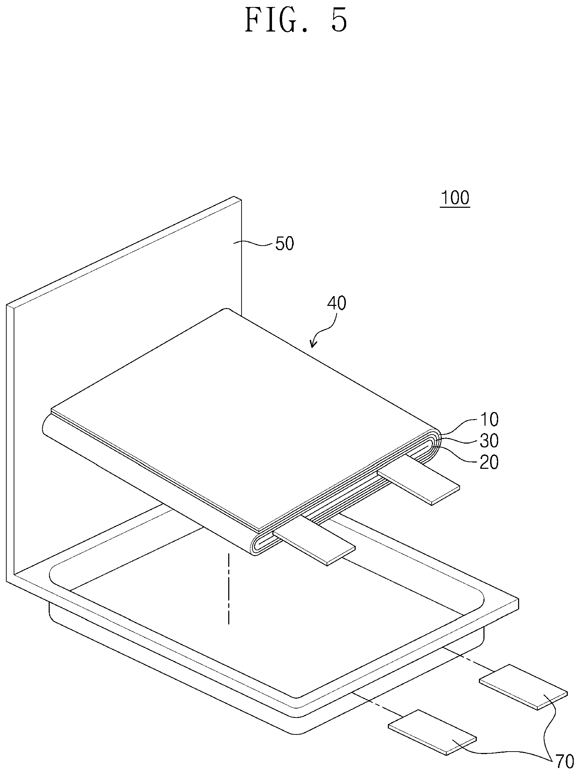

The rechargeable lithium battery may be classified into cylindrical, prismatic, pouch, coin-type (kind) batteries, and/or the like depending on their shape. FIGS. 2 to 5 are schematic views each illustrating a rechargeable lithium battery according to one or more embodiments of the present disclosure. FIG. 2 shows a cylindrical battery, FIG. 3 shows a prismatic battery, and FIGS. 4 and 5 show pouch-type (kind) batteries. Referring to FIGS. 2 to 5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution. The rechargeable lithium battery 100 may include a sealing member 60 sealing the case 50, as shown in FIG. 2. In FIG. 3, the rechargeable lithium battery 100 may include a positive lead tab 11, a positive terminal 12, a negative lead tab 21, and a negative terminal 22. As shown in FIGS. 4 and 5, the rechargeable lithium battery 100 may include an electrode tab 70, which may be, for example, a positive electrode tab 71 and a negative electrode tab 72 serving as an electrical path for conducting the current formed in the electrode assembly 40 to the outside.

The rechargeable lithium battery according to one or more embodiments may be applied to automobiles, mobile phones, and/or one or more suitable types (kinds) of electric devices, as non-limiting examples.

FIG. 6 is a cross-sectional view showing a positive electrode for a rechargeable lithium battery according to one or more embodiments of the present disclosure. Referring to FIG. 6, the positive electrode 10 for a rechargeable lithium battery includes the current collector COL1 (see, e.g., FIG. 1) and the positive electrode active material layer AML1 (see, e.g., FIG. 1) as described above. The positive electrode active material layer AML1 includes a first active material layer ATL1, and a second active material layer ATL2 stacked on the first active material layer ATL1.

FIG. 7 is an enlarged view showing a first active material layer of a positive electrode for a rechargeable lithium battery according to one or more embodiments of the present disclosure.

Referring to FIG. 7, the first active material layer ATL1 includes a first particle PTC1, and may include a first binder BND1 and a first conductive material CDM1. The first active material layer ATL1 may further include an additive that may serve as a sacrificial positive electrode.

The first binder BND1 may combine the first particle PTC1 and the first conductive material CDM1. In one or more embodiments, the first binder BND1 may stably fix the first active material layer ATL1 to the current collector COL1. For example, the first binder BND1 may include at least one selected from the group consisting of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but the present disclosure is not limited thereto.

The first conductive material CDM1 may be used to improve conductivity of the first active material layer ATL1. Any conductive material that does not cause chemical changes in the first active material layer ATL1 may be used as the first conductive material CDM1, e.g., without limitation. For example, the first conductive material CDM1 may include a carbon-based material such as natural graphite, artificial graphite, carbon black, acetylene black, ketjen black, a carbon fiber, a carbon nanofiber, and a carbon nanotube; a metal-based material including copper, nickel, aluminium, silver, and/or the like in a form of a metal powder or a metal fiber; a conductive polymer such as a polyphenylene derivative; and/or a (e.g., any suitable) mixture thereof.

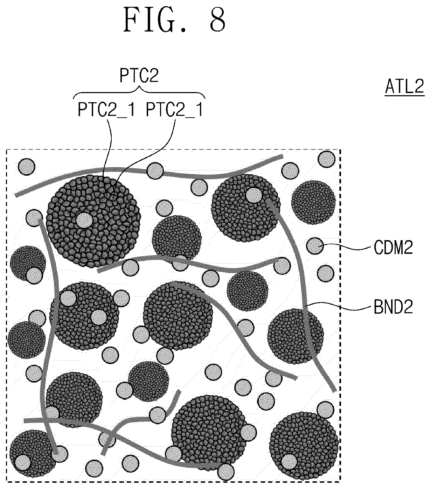

FIG. 8 is an enlarged view showing a second active material layer of a positive electrode for a rechargeable lithium battery according to one or more embodiments of the present disclosure.

Referring to FIG. 8, the second active material layer ATL2 includes a second particle PTC2, and may include a second binder BND2 and a second conductive material CDM2. The second active material layer ATL2 may further include an additive that may serve as a sacrificial positive electrode.

The second binder BND2 may combine the second particle PTC2 and the second conductive material CDM2. In one or more embodiments, the second binder BND2 may stably fix the second active material layer ATL2 onto the first active material layer ATL1. In one or more embodiments, the second binder BND2 may include at least one selected from the group consisting of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber,

# EP 4 654 299 A1

a (meth)acrylated styrene-butadiene rubber, an epoxy resin, a (meth)acrylic resin, a polyester resin, and nylon, but the present disclosure is not limited thereto.

The second conductive material CDM2 may be used to improve conductivity of the second active material layer ATL2. Any conductive material that does not cause chemical changes in the second active material layer ATL2 may be used as the second conductive material CDM2 without limitation. In one or more embodiments, the second conductive material CDM2 may include a carbon-based material such as natural graphite, artificial graphite, carbon black, acetylene black, ketjen black, a carbon fiber, a carbon nanofiber, and a carbon nanotube; a metal-based material including copper, nickel, aluminium, silver, and/or the like in a form of a metal powder or a metal fiber; a conductive polymer such as a polyphenylene derivative; and/or a (e.g., any suitable) mixture thereof.

Hereinafter, each of the first particle PTC1 and the second particle PTC2 will be described in more detail.

**First Particle PTC1**

The first particle PTC1 may be in the form of a single particle, in the form of single particles attached to one another, or in a combination of these forms. Herein, the single particle may indicate a single type (kind) of particle having no grain boundary inside thereof. The single particle may indicate one single particle morphologically present in an independent phase in which particles are not aggregated (e.g., agglomerated) with one another, a particle having a monolith structure, a particle having a one-body structure, or a non-aggregated (e.g., non-agglomerated) particle. For example, the single particle may be a single crystal. Alternatively, in one or more embodiments, the first particle may be a particle containing several crystals. The first particle may be in an isolated form. Alternatively, in one or more embodiments, the first particle may be in the form in which about 2 to about 100 single particles are attached to one another.

The first particle PTC1 including at least one single particle may have an average particle diameter ($D_{50}$) of about 50 nm to about 5 $\mu$m, about 100 nm to about 3 $\mu$m, about 500 nm to about 2.5 $\mu$m, or about 1 $\mu$m. In one or more embodiments, the average particle diameter may be measured through a particle size analyzer. The average particle diameter ($D_{50}$) may indicate a diameter of particles at a cumulative volume of about 50 vol% in a particle size distribution.

The minimum particle diameter of the first particle, that is, the particle diameter of the first particles in the form of a single particle, may be about 10 nm to about 900 nm, about 50 nm to about 500 nm, or about 200 nm to about 300 nm. In one or more embodiments, the minimum particle diameter of the first primary particle, that is, the particle diameter of the first primary particles in the form of a single particle, may indicate a diameter measured by randomly selecting about 30 first primary particles on an electron micrograph of a positive electrode active material. The particle diameter of the first particle in the form of a single particle may be substantially uniform.

The minimum particle diameter of the first particle, measured using a scanning electron microscope (SEM), may be about 200 nm to about 300 nm. The average particle diameter ($D_{50}$) of the first particle PTC1, measured using a scanning electron microscope (SEM), may be about 0.5 $\mu$m to about 2.5 $\mu$m.

In one or more embodiments, the first particle PTC1 may include a coating layer on a surface thereof. The coating layer may entirely cover the surface of the first particle PTC1, or may partially cover the surface of the first particle PTC1. For example, the coating layer may include carbon and/or a carbon-containing compound. The coating layer may further include at least one selected from the group consisting of a titanium-containing compound, a magnesium-containing compound, a vanadium-containing compound, a niobium-containing compound and an aluminium-containing compound. Metal-containing compounds, such as titanium-containing compounds, magnesium-containing compounds, vanadium-containing compounds, niobium-containing compounds and aluminium-containing compounds, may be, for example, metal oxides, metal hydroxides, metal carbonates, composites thereof, or mixtures thereof. The metal-containing compounds may further include other metals or non-metallic elements. For example, the metal-containing compounds may further include lithium. The first particle PTC1 may have improved structural stability and electrical conductivity through the coating layer.

The first particle PTC1 includes an olivine-based lithium compound represented by Formula 1.

$$\text{Formula 1} \qquad \text{Li}_{a1}\text{Fe}_{x1}\text{B1}_{y1}\text{PO}_{4-b1}$$

In Formula 1 above, $0.8 \leq a1 \leq 1.2$, $0.95 \leq x1 \leq 0.999$, $0.001 \leq y1 \leq 0.05$, $0 \leq b1 \leq 0.05$, and $x1 + y1 = 1$ are satisfied. B1 is at least one element selected from the group consisting of Ti, Mg, V, Nb, and Al. B1 is a dopant with which the first particle PTC1 is doped. For example, B1 may include Ti.

The first particle PTC1 may further include carbon derived from the first active material layer described above. The first particle PTC1 may have a carbon element content (e.g., amount) of about 0.5 wt% to about 5 wt%, about 0.5 wt% to about 3 wt%, or about 0.5 wt% to about 2 wt%. The content of carbon element included in the first particle PTC1 may be defined as the content of carbon element included in the first particle PTC1 with respect to the weight of the first particle PTC1. That is, the content of carbon element included in the first particle PTC1 may be defined as weight of carbon element included in the first particle PTC1 /weight of the first particle PTC1. The content of carbon element may be measured, for example, via carbon-sulfur analysis. However, methods of measuring are not limited to thereto.

Carbon element analysis according to embodiments of the present disclosure may be performed by an Elementar Micro Cube elemental analyzer. Particular operation method and conditions are as follows. About 1-2 mg of a sample is weighed in a tin cup, put in an automatic sampling tray, brought into a combustion tube via a ball valve, and burned at a combustion temperature of about 1000°C. After that, the burned gas is reduced using reducing copper to form carbon dioxide. The carbon dioxide is detected using a TCD detector. In the method of measuring the carbon content according to embodiments of the present disclosure, scanning electron microscopy-energy dispersive X-ray spectroscopy (SEM-EDS) is performed with respect to the surface of the particles, and quantitative analysis is performed. As the method of measuring the carbon content, an inductively coupled plasma-mass spectrometry (ICP-MS), an inductively coupled plasma optical emission spectroscopy (ICP-OES) or the like may be used in addition to the SEM-EDS.

**Second Particle PTC2**

The second particle PTC2 may be in the form of polycrystal and in the form of a secondary particle or second secondary particles in each of which at least two second primary particles PTC2_1 are aggregated (e.g., agglomerated). For example, one second particle PTC2 may include a plurality of second primary particles PTC2_1 aggregated (e.g., agglomerated) together. The second particle PTC2 may be in the shape of sphere or oval. For example, the second particle PTC2 may be a polycrystal that can be spherical or oval, consisting of multiple aggregated (e.g., agglomerated) second primary particles PTC2_1 (and is not in the form of a single particle).

In one or more embodiments, the second particle PTC2 may include a coating layer on a surface thereof. The coating layer may entirely cover the surface of the second particle PTC2, or may partially cover the surface of the second particle PTC2. For example, the coating layer may include carbon and/or a carbon-containing compound. The second particle PTC2 may have improved structural stability and electrical conductivity through the coating layer.

The coating layer may further include at least one selected from the group consisting of a titanium-containing compound, a magnesium-containing compound, a vanadium-containing compound, a niobium-containing compound and an aluminium-containing compound. Metal-containing compounds, such as titanium-containing compounds, magnesium-containing compounds, vanadium-containing compounds, niobium-containing compounds, and aluminium-containing compounds, may be, for example, metal oxides, metal hydroxides, metal carbonates, composites thereof, or mixtures thereof. The metal-containing compounds may further include other metals or non-metallic elements. For example, the metal-containing compounds may further include lithium.

In one or more embodiments, the second particle PTC2 may further include a grain boundary coating layer on a surface of each of the primary particles PTC2_1. The grain boundary coating layer may be present inside the second particle PTC2. The grain boundary coating layer may be applied along an interface between the primary particles PTC2_1 inside the second particle PTC2. For example, the grain boundary coating layer may be a material applied onto a grain boundary inside the second particle PTC2. The grain boundary coating layer may include carbon and/or a carbon-containing compound. The grain boundary coating layer may further include at least one selected from the group consisting of a titanium-containing compound, a magnesium-containing compound, a vanadium-containing compound, a niobium-containing compound, and an aluminium-containing compound.

The inside of the second particle PTC2 described above may indicate the entire inside portion of the second particle PTC2 excluding the surface of the second particle PTC2. For example, the inside of the second particle PTC2 may indicate a region of the entire inside from about 10 nm in depth, or a region from about 10 nm to about 2 $\mu$m in depth, with respect to the surface of the second particle PTC2.

The second particle PTC2 may further include a grain boundary coating portion, and may thus have greater structural stability and have a substantially uniform coating layer formed on the surface thereof. In one or more embodiments, the second particle PTC2 may further include a grain boundary coating portion, and may thus have further improved electrical conductivity.

The second particle PTC2 may have an average particle diameter of about 2 $\mu$m to about 15 $\mu$m, about 3 $\mu$m to about 12 $\mu$m, or about 3 $\mu$m to about 7 $\mu$m. The average particle diameter of the second particle PTC2 may be greater than the average particle diameter of the first particle PTC1. In one or more embodiments, the particle diameter may be obtained by measuring a diameter by randomly selecting about 30 second particles PTC2 on an electron microscope image of a positive electrode active material, and taking a diameter ($D_{50}$) of the particles at an accumulated volume of about 50 vol% in particle size distribution as the average particle diameter.

The minimum particle diameter of the second primary particle PTC2_1 included in the second particle PTC2, that is, the average particle diameter of the second primary particles PTC2_1, may be about 10 nm to about 400 nm, about 20 nm to about 300 nm, about 50 nm to about 200 nm, or about 100 nm to about 200 nm. In one or more embodiments, the minimum particle diameter of the second primary particle PTC2_1, that is, the average particle diameter of the second primary particles PTC2_1, may indicate a diameter measured by randomly selecting about 30 first primary particles on an electron micrograph of a positive electrode active material. The particle diameter of the second primary particle PTC2_1 may be substantially uniform.

For example, the average particle diameter of the second particle PTC2, measured using a scanning electron microscope (SEM), may be about 3 $\mu$m to about 7 $\mu$m. The particle diameter of the second primary particle PTC2_1 included in the second particle PTC2 may be about 100 nm to about 200 nm.

The second particle PTC2 includes an olivine-based lithium compound represented by Formula 2.

$$\text{Formula 2} \qquad Li_{a2}Fe_{x2}B2_{y2}PO_{4-b2}$$

In Formula 2 above, $0.8 \leq a2 \leq 1.2$, $0.95 \leq x2 \leq 0.999$, $0.001 \leq y2 \leq 0.05$, $0 \leq b2 \leq 0.05$, and $x2 + y2 = 1$ is satisfied. B2 is at least one element selected from the group consisting of Ti, Mg, V, Nb, and Al. B2 is a dopant with which the second particle PTC2 is doped. For example, B2 may include Ti.

The second particle PTC2 may further include carbon derived from the coating layer and/or the grain boundary coating layer described above. The second particle PTC2 may have a carbon element content (e.g., amount) of about 0.5 wt% to about 10 wt%, about 1 wt% to about 4 wt%, about 1 wt% to about 3 wt%, or about 1.5 wt% to about 2.5 wt%. The content of carbon included in the second particle PTC2 may be defined as the content of carbon element included in the second particle PTC2 with respect to the weight of the second particle PTC2. That is, the content of carbon included in the second particle PTC2 may be defined as weight of carbon element included in the second particle PTC2/weight of the second particle PTC2. The content of carbon element may be measured, for example, via carbon-sulfur analysis. However, methods of measuring are not limited to thereto.

The second particle PTC2 may be in the shape of sphere in which nano-sized primary particles PTC2_1 are aggregated (e.g., agglomerated). The second particle PTC2 may have the primary particles PTC2_1 closely aggregated (e.g., agglomerated), and may thus exhibit the following characteristics. The second particle PTC2 may be in the shape of sphere or oval. The second particle PTC2 may have an average particle diameter ($D_{50}$) of about 2 $\mu$m to about 15 $\mu$m. The second particle PTC2 may have a porosity of about 20% to about 40%. Porosity (n) may be defined as the pore volume ($V_p$) divided by the total volume ($V_t$) of a particle, or $n = \frac{V_p}{V_t}$ . A Span value (e.g., $(D_{90} - D_{10}) / D_{50}$) of the second particle PTC2, analyzed through a particle size analyzer, may be about 0.3 to about 0.75.

Referring back to FIG. 6, the positive electrode active material layer AML1 according to one or more embodiments of the present disclosure will be described in more detail.

The positive electrode active material layer AML1 includes the first active material layer ATL1, and the second active material layer ATL2 stacked on the first active material layer ATL1. The first active material layer ATL1 includes the first particle PTC1, and may include the first binder BND1 and the first conductive material CDM1. The second active material layer ATL2 includes the second particle PTC2, and may include the second binder BND2 and the second conductive material CDM2.

The first particle PTC1, which may be a single particle, may improve energy density, and the second particle PTC2, which may be a secondary particle, may improve low-temperature characteristics and lifetime characteristics. The positive electrode active material layer AML1 of the present disclosure has a double layer structure including the first active material layer ATL1 containing the first particle PTC1 and the second active material layer ATL2 containing the second particle PTC2, and may thus improve energy density, low-temperature characteristics, and lifetime characteristics together. For example, the low-temperature characteristics may be significantly improved by placing the second active material layer containing the second particle PTC2 on a surface of a positive electrode in which electrochemical reactions take place most actively.

The first active material layer ATL1 may include about 3 parts by weight to about 10 parts by weight of the first binder BND1 with respect to 100 parts by weight of the first active material layer ATL1.

The second active material layer ATL2 may include about 2 parts by weight to about 5 parts by weight of the second binder BND2 with respect to 100 parts by weight of the second active material layer ATL2.

The content (e.g., amount) of the first binder BND1 included in the first active material layer ATL1 may be greater than the content (e.g., amount) of the second binder BND2 included in the second active material layer ATL2. In one or more embodiments, a ratio of the content (e.g., amount) of the first binder BND1 in the first active material layer ATL1 to the content (e.g., amount) of the second binder BND2 in the second active material layer ATL2 may be about 1.5 to about 5.

A relatively large amount of the first binder BND1 may be desired or required to attach the first particle PTC1 having a small average particle diameter to the current collector COL1 (see, e.g., FIG. 1), whereas a relatively small amount of the second binder BND2 may be desired or required to fix the second particle PTC2 having a large average particle diameter onto the first active material layer ATL1. The positive electrode active material layer AML1 of embodiments of the present disclosure includes the second active material layer ATL2 having a relatively small amount of binder, and may thus improve energy density.

The first active material layer ATL1 may include about 1 part by weight to about 5 parts by weight of the first conductive material CDM1 with respect to 100 parts by weight of the first active material layer ATL1.

The second active material layer ATL2 may include about 0.5 to about 5 parts by weight, or about 1 to about 5 parts by weight, of the second conductive material CDM2 with respect to 100 parts by weight of the second active material layer ATL2.

The content (e.g., amount) of the first conductive material CDM1 included in the first active material layer ATL1 may be equal to or greater than the content (e.g., amount) of the second conductive material CDM2 included in the second active material layer ATL2. In one or more embodiments, a ratio of the content (e.g., amount) of the first conductive material CDM1 in the first active material layer ATL1 to the content (e.g., amount) of the second conductive material CDM2 in the second active material layer ATL2 may be about 1 to about 4.

The second particle PTC2 in the second active material layer ATL2 may amount to about 10 wt% to about 50 wt%, about 20 wt% to about 40 wt%, or about 25 wt% to about 35 wt%, with respect to a total weight of the first particle PTC1 in the first active material layer ATL1 and the second particle PTC2 in the second active material layer ATL2.

In one or more embodiments, the first active material layer ATL1 may have a loading level of about 5 $mg/cm^2$ to about 10 $mg/cm^2$. The second active material layer ATL2 may have a loading level of about 5 $mg/cm^2$ to about 25 $mg/cm^2$. The loading level of the first active material layer ATL1 or the second active material layer ATL2 was determined by measuring the mass of the active material coating per unit area of the layer. First, the first active material layer ATL1 or the second active material layer was cut into a circular or rectangular sample of a predetermined area. The mass of the sample was measured using an analytical balance with an accuracy of 0.1 mg. The loading level was then calculated by dividing the measured mass of the active material by the predetermined area of the sample and expressed in units of $mg/cm^2$.

The first active material layer ATL1 may have a thickness T1. In one or more embodiments, T1 may increase with a rise in weight of the first particle PTC1 included in the first active material layer ATL1. The second active material layer ATL2 may have a thickness T2. In one or more embodiments, T2 may increase with a rise in weight of the second particle PTC2 included in the second active material layer ATL2. In one or more embodiments, the ratio of T2 with respect to the sum of T1 and T2 (i.e., the ratio of T2/(T1+T2)) may be about 0.1 to about 0.5, about 0.2 to about 0.4, or about 0.25 to about 0.35. Within the ranges described above, low-temperature characteristics may be improved while excellent or suitable energy density is maintained. To put it another way, the first active material layer ATL1 may have a thickness T1, which may increase with the weight of the first particle PTC1 included in it. Similarly, the second active material layer ATL2 may have a thickness T2, which may increase with the weight of the second particle PTC2 included in it. In some embodiments, the ratio of T2 to the sum of T1 and T2 (i.e., the ratio of T2/(T1+T2)) may range from about 0.1 to about 0.5, about 0.2 to about 0.4, or about 0.25 to about 0.35. Within these ranges, low-temperature characteristics may be improved while maintaining excellent or suitable energy density.

In one or more embodiments, the positive electrode active material layer AML1 of the present disclosure may have a pellet density (also referred to as a compressed density) of about 2.0 g/cc to about 2.5 g/cc. The pellet density of the positive electrode was determined by compressing the electrode material under a controlled pressure and measuring its mass and volume. First, a positive electrode sheet was cut into a circular or rectangular sample of a predetermined area. The mass of the sample was measured using an analytical balance with an accuracy of 0.1 mg. The thickness of the pelletized electrode was measured using a micrometer or a thickness gauge, ensuring that the measurement was taken at multiple points to obtain an average value. The volume of the pellet was calculated by multiplying the measured thickness by the predetermined area of the sample. The pellet density was then determined by dividing the measured mass by the calculated volume and expressed in units of g/cc. A rechargeable lithium battery including the positive electrode according to one or more embodiments of the present disclosure may have improved low-temperature characteristics.

Hereinafter, Preparation Examples, Examples, and Comparative Examples of the present disclosure will be described. However, the following Examples are presented only as embodiments of the present disclosure, and the present disclosure is not limited by the following Examples.

**Preparation Example 1: Preparation of First Particle in Single Particle Form**

An iron phosphate precursor ($Fe_1PO_4$), lithium carbonate, and titanium dioxide were mixed at a molar ratio of Fe:Li:Ti of 1:1.03:0.03. 10 wt% of glucose was added to the mixture. The mixture was subjected to a wet grinding process through ball milling. The mixture was evaporated to dryness on a heating tray and then placed and dried in a vacuum oven at 120 °C for 4 hours. The dried mixture was fired at 750 °C for 10 hours in a nitrogen atmosphere. The fired product was ground to obtain a first particle in the form of a single particle. Using a scanning electron microscope (SEM), single particles constituting the first particle were found to have a particle diameter of about 200 nm to about 300 nm, and the first particle was found to have a $D_{50}$ of about 1 $\mu m$. In addition, using scanning electron microscopy and energy dispersive X-ray spectroscopy (SEM-EDS), the primary particle of the first particle was found to contain 1.52 wt% of carbon.

**Preparation Example 2: Preparation of Second Particle in Secondary Particle Form**

An iron phosphate precursor ($Fe_1PO_4$), lithium carbonate, and titanium dioxide were mixed at a molar ratio of Fe:Li:Ti of 1:1.03:0.03. 10 wt% of glucose was further added to the mixture. The slurry mixture was spray-dried and evaporated to dryness at a spray pressure of 0.5 MPa and a temperature of 230 °C. The dried mixture was fired at 750 °C for 10 hours in a nitrogen atmosphere to obtain a second particle in the form of a secondary particle. Using a scanning electron microscope (SEM), second primary particles constituting the second particle were found to have a particle diameter of about 100 nm to about 200 nm, and the second particle was (e.g., secondary particles each formed from a plurality of second primary particles were) found to have a $D_{50}$ of about 5 $\mu$m. In addition, using scanning electron microscopy and energy dispersive X-ray spectroscopy (SEM-EDS), the second particle was found to contain 1.84 wt% of carbon.

In other words, Preparation Example 1 describes the creation of a single particle form of the first particle by mixing an iron phosphate precursor (Fe$_1$PO$_4$), lithium carbonate, and titanium dioxide with glucose, followed by wet grinding, drying, and firing, resulting in the first particles PTC1 with a $D_{50}$ of about 1 $\mu$m (a diameter of the first particle in the form of a single particle is about 200 to about 300 nm) and, containing 1.52 wt% carbon. In contrast, Preparation Example 2 outlines the formation of a secondary particle form of the second particle PTC2 using a similar mixture, but with the addition of spray-drying before firing, producing primary particles with a diameter of about 100 to about 200 nm and secondary particles with a $D_{50}$ of about 5 $\mu$m, containing 1.84 wt% carbon.

**Example 1: Positive Electrode including First Active Material Layer containing First Particle and Second Active Material Layer containing Second Particle (Nano-type (kind) Lithium Iron Phosphate (LFP): Assembly-type (kind) LFP = 90:10)**

The first particle prepared through Preparation Example 1, the first binder (polyvinylidene fluoride), and the first conductive material (carbon black) were dispersed in N-methylpyrrolidone at a weight ratio of 1:0.1:0.03 to prepare a first active material slurry.

The second particle prepared through Preparation Example 2, the second binder (polyvinylidene fluoride), and the second conductive material (carbon black) were dispersed in N-methylpyrrolidone at a weight ratio of 1:0.05:0.02 to prepare a second active material slurry.

The first active material slurry was applied onto a 15 $\mu$m thick aluminium (Al) thin film, which is a positive electrode current collector, and dried to form a first active material layer. The second active material slurry was applied onto the first active material layer and dried to form a second active material layer. In this case, the first and second active material layers were formed such that the weight ratio of the first particle in the first active material slurry and the second particle in the second active material slurry was "9:1 (first particle : second particle)". Through a roll press, a positive electrode in which the aluminium current collector, the first active material layer, and the second active material layer were stacked in this order was prepared.

**Example 2: Positive Electrode including First Active Material Layer containing First Particle and Second Active Material Layer containing Second Particle (Nano-type (kind) LFP: Assembly-type (kind) LFP = 80:20)**

A positive electrode was prepared in substantially the same manner as in Example 1, except that the weight ratio of the first particle in the first active material slurry and the second particle in the second active material slurry was "4:1 (first particle : second particle)".

**Example 3: Positive Electrode including First Active Material Layer containing First Particle and Second Active Material Layer containing Second Particle (Nano-type (kind) LFP: Assembly-type (kind) LFP = 70:30)**

A positive electrode was prepared in substantially the same manner as in Example 1, except that the weight ratio of the first particle in the first active material slurry and the second particle in the second active material slurry was "7:3 (first particle : second particle)".

**Example 4: Positive Electrode including First Active Material Layer containing First Particle and Second Active Material Layer containing Second Particle (Nano-type (kind) LFP: Assembly-type (kind) LFP = 60:40)**

A positive electrode was prepared in substantially the same manner as in Example 1, except that the weight ratio of the first particle in the first active material slurry and the second particle in the second active material slurry was "3:2 (first particle : second particle)".

**Example 5: Positive Electrode including First Active Material Layer containing First Particle and Second Active Material Layer containing Second Particle (Nano-type (kind) LFP: Assembly-type (kind) LFP = 50:50)**

A positive electrode was prepared in substantially the same manner as in Example 1, except that the weight ratio of the first particle in the first active material slurry and the second particle in the second active material slurry was "1:1 (first particle : second particle)".

**Comparative Example 1: Positive Electrode including Active Material Layer with Single Layer Structure (First Particle)**

The first particle prepared through Preparation Example 1, the first binder (polyvinylidene fluoride), and the first conductive material (carbon black) were dispersed in N-methylpyrrolidone at a weight ratio of 1:0.1:0.03 to prepare a positive electrode active material slurry.

The positive electrode active material slurry was applied onto a 15 $\mu$m thick aluminium (Al) thin film, which is a positive electrode current collector, and dried. Through a roll press, a positive electrode in which a positive electrode active material layer was stacked on the aluminium current collector was prepared.

**Comparative Example 2: Positive Electrode including Active Material Layer with Single Layer Structure (Second Particle)**

The second particle prepared through Preparation Example 2, the second binder (polyvinylidene fluoride), and the second conductive material (carbon black) were dispersed in N-methylpyrrolidone at a weight ratio of 1:0.05:0.02 to prepare a positive electrode active material slurry.

The positive electrode active material slurry was applied onto a 15 $\mu$m thick aluminium (Al) thin film, which is a positive electrode current collector, and dried. Through a roll press, a positive electrode in which a positive electrode active material layer was stacked on the aluminium current collector was prepared.

**Comparative Example 3: Positive Electrode including Active Material Layer with Single Layer Structure (First Particle + Second Particle, Nano-type (kind) LFP: Assembly-type (kind) LFP = 50:50)**

The first particle and the second particle prepared through Preparation Examples 1 and 2 were mixed at a weight ratio of 1:1 to prepare a mixed active material. The mixed active material, a binder (polyvinylidene fluoride), and a conductive material (carbon black) were dispersed in N-methylpyrrolidone at a weight ratio of 1:0.1:0.03 to prepare a positive electrode active material slurry. The positive electrode active material slurry was applied onto a 15 $\mu$m thick aluminium (Al) thin film, which is a positive electrode current collector, and dried. Through a roll press, a positive electrode in which a positive electrode active material layer was stacked on the aluminium current collector was prepared.

**Comparative Example 4: Positive Electrode including First Active Material Layer containing Second Particle and Second Active Material Layer containing First Particle (Nano-type (kind) LFP: Assembly-type (kind) LFP = 50:50)**

A positive electrode was prepared in substantially the same manner as in Example 1, except that the aluminium current collector, the second active material layer, and the first active material layer were stacked in this order.

A second active material slurry was applied onto an aluminium thin film and dried to form a second active material layer, and a first active material slurry was applied onto the second active material layer and dried to form a first active material layer.

**Comparative Example 5: Positive Electrode including First Active Material Layer containing Second Particle and Second Active Material Layer containing First Particle (First binder weight: Second binder weight = 5.88:1)**

A positive electrode was prepared in substantially the same manner as in Example 5, except that the second particle, the second binder (polyvinylidene fluoride), and the second conductive material (carbon black) were dispersed in N-methylpyrrolidone at a weight ratio of 1:0.017:0.003 to prepare a second active material slurry.

**Comparative Example 6: Positive Electrode including First Active Material Layer containing Second Particle and Second Active Material Layer containing First Particle (First binder weight: Second binder weight = 1:1)**

A positive electrode was prepared in substantially the same manner as in Example 5, except that the second particle, the second binder (polyvinylidene fluoride), and the second conductive material (carbon black) were dispersed in N-methylpyrrolidone at a weight ratio of 1:0.1:0.3 to prepare a second active material slurry.

**Preparation of Negative Electrode**

Graphite, a binder, and a conductive material were mixed in an N-methylpyrrolidone solvent to prepare a negative electrode active material slurry. The negative electrode active material slurry was applied onto a copper current collector, dried, and rolled to prepare a negative electrode.

**Preparation of Rechargeable Lithium Battery**

A coin full cell was prepared using the positive electrode and the negative electrode prepared. A polypropylene film (Celgard™ 3510) was used as a separator. As an electrolyte, an electrolyte solution obtained by mixing 1.3 M $LiPF_6$ with a mixture solvent of ethylene carbonate (EC), diethyl carbonate (DEC), and fluoroethylene carbonate (FEC) (2:6:2 by volume ratio) was used.

**Evaluation Example 1: Analysis of Positive Electrode Active Material Surface**

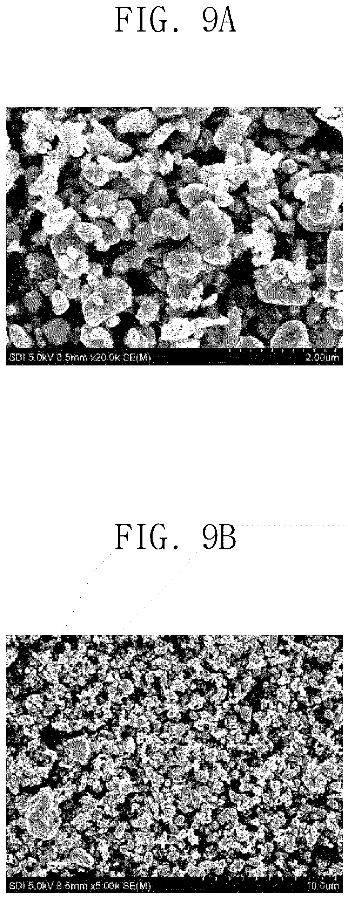

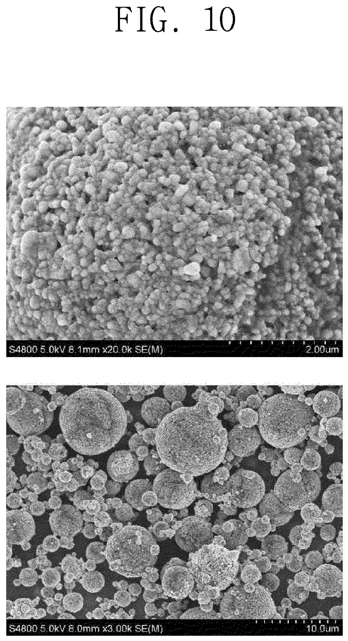

SEM images of the first particle prepared in Preparation Example 1 are shown in FIGS. 9A and 9B. SEM images of the second particle prepared in Preparation Example 2 are shown in FIG. 10. Referring to FIGS. 9A and 9B, it is seen that the first particle according to one or more embodiments of the present disclosure is in the form of a nano-sized fine single particle. Referring to FIG. 10, it is seen that the second particle according to one or more embodiments of the present disclosure is in the form of a micrometer-sized secondary particle. It is determined that the second particle is in the form of a secondary particle in which a plurality of primary particles are aggregated (e.g., agglomerated).

**Evaluation Example 2: Analysis of Positive Electrode Properties**

Thickness and pellet density (PD) of respective positive electrode active material layers of the positive electrodes prepared through Examples 1 to 5 and Comparative Examples 1 to 6 were measured, and the results are shown in Table 1.

Table 1

| Item | Form of active material layer | Thickness | | | Pellet density (g/cc) |
|---|---|---|---|---|---|
| | | Thickness of first active material layer ($\mu$m) | Thickness of second active material layer ($\mu$m) | Total thickness of active materials layer ($\mu$m) | |
| Example 1 | Double layer | 45 | 5 | 50 | 2.43 |
| Example 2 | Double layer | 40 | 10 | 50 | 2.43 |
| Example 3 | Double layer | 35 | 15 | 50 | 2.42 |
| Example 4 | Double layer | 30 | 20 | 50 | 2.41 |
| Example 5 | Double layer | 25 | 25 | 50 | 2.38 |
| Comparativ e Example 1 | Single layer | 50 | 0 | 50 | 2.44 |
| Comparativ e Example 2 | Single layer | 0 | 50 | 50 | 2.35 |
| Comparativ e Example 3 | Single layer | - | - | 50 | 2.39 |
| Comparativ e Example 4 | Double layer | 25 | 25 | 50 | 2.38 |
| Comparativ e Example 5 | Double layer | 25 | 25 | 50 | 2.21 |
| Comparativ e Example 6 | Double layer | 25 | 25 | 50 | 2.35 |

Referring to Example 5 and Comparative Example 5, when a ratio of the weight of the first binder to the weight of the second binder is greater than 5, that is, when too little of the second binder is included, it is determined that bindability with respect to an active material is reduced, resulting in reduced pellet density.

In addition, referring to Example 5 and Comparative Example 6, when the weight of the first binder is the same as the weight of the second binder, it is determined that the amount of positive electrode active material is relatively reduced, resulting in reduced pellet density.

**Evaluation Example 3: Evaluation of Battery Properties**

Properties of rechargeable lithium batteries prepared using the positive electrodes of Examples 1 to 5 and Comparative Examples 1 to 6 were evaluated.

For initial charging/discharging, the rechargeable lithium batteries were initially charged at a constant current of 0.1 C and a constant voltage of 3.8 V, and after 10 minutes of rest, discharged up to 3.0 V at a constant current of 0.1 C, and then the initial discharge capacity was measured, and in this case, the ratio of discharge capacity to charge capacity was calculated as efficiency. The results (charge amount, discharge amount, efficiency) are shown in Table 2.

In addition, the charging/discharging was repeated 50 times at 1.0 C/1.0 C and 45 °C to measure discharge capacity at the 50th cycle, and then the ratio of the 50th discharge capacity to the initial discharge capacity was evaluated, and the results (lifetime at 3.8 V) are shown in Table 2.

In addition, a coin cell was additionally prepared and measured at -20 °C for a capacity of 0.2 C. The results of evaluating the battery properties are shown in Table 2.

Table 2

| Item | Charge at 3.8 V (mAh/g ) | Discharge at 3.8 V (mAh/g) | Efficiency at 3.8 V (%) | Lifetime at 3.8 V (%, 50 cycle) | Capacity at -20 °C (mAh/g) | Energy density (Wh/L) | Average voltage (V) |
|---|---|---|---|---|---|---|---|
| Example 1 | 163.4 | 161.1 | 98.6 | 99.2 | 59.1 | 1253 | 3.2 |
| Example 2 | 163.4 | 161.3 | 98.8 | 99.3 | 64.1 | 1254 | 3.2 |
| Example 3 | 163.4 | 161.4 | 98.8 | 99.3 | 69 | 1250 | 3.2 |
| Example 4 | 163.3 | 161.6 | 98.9 | 99.2 | 72.9 | 1246 | 3.2 |
| Example 5 | 163.3 | 161.8 | 99.1 | 99.1 | 77.2 | 1232 | 3.2 |
| Compar ative Example 1 | 163.4 | 160.9 | 98.5 | 97.7 | 53.2 | 1256 | 3.2 |
| Compar ative Example 2 | 163.3 | 162.7 | 99.6 | 99.1 | 92.6 | 1224 | 3.2 |
| Compar ative Example 3 | 163.2 | 160.5 | 98.3 | 98.5 | 62.6 | 1228 | 3.2 |
| Compar ative Example 4 | 163.5 | 161.8 | 99.0 | 98.1 | 58.9 | 1232 | 3.2 |
| Compar ative Example 5 | 163.3 | 161.8 | 99.1 | 97.1 | 55.2 | 1144 | 3.2 |
| Compar ative Example 6 | 163.5 | 162.1 | 99.3 | 99.2 | 67.2 | 1225 | 3.2 |

Referring to Table 2, the rechargeable batteries according to Examples 1 to 5 of the present disclosure have a greater capacity at -20 °C than the rechargeable battery according to Comparative Example 1. In addition, the rechargeable batteries according to Examples 1 to 5 have a greater energy density than the rechargeable battery according to Comparative Example 2.

In particular, the rechargeable batteries according to Examples 2 to 4 have a capacity at -20 °C of greater than 60 mAh/g, and an energy density decrease by only about 0.8% compared to the rechargeable battery according to Comparative Example 1. For example, the rechargeable batteries according to Examples 2 to 4 have significantly excellent or suitable energy density and low-temperature performance.

In addition, the rechargeable battery according to Example 5 has improved lifetime characteristics and energy density compared to the rechargeable battery according to Comparative Example 5, which included too little of the second binder and the second conductive material in the second active material layer.

In addition, the rechargeable battery according to Example 5 has improved energy density compared to the rechargeable battery according to Comparative Example 6, which included too much (or an excessive amount) of the second binder and the second conductive material in the second active material layer. This difference in energy density may be even more prominent when preparing large cells.

A positive electrode according to the present disclosure includes a first active material layer containing an olivine-based first particle that may have a size of hundreds of nanometers to several micrometers, and a second active material layer containing a layered second particle, that may a size of several micrometers, and stacked on the first active material layer, and may thus have improved pellet density, capacity, and energy density. The second active material layer according to the present disclosure is fixed (effectively fixed) onto the first active material layer, even with a relatively small amount of a binder. A rechargeable lithium battery according to the present disclosure may have a relatively high average voltage.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

Further, the use of "may" when describing embodiments of the present disclosure refers to "one or more embodiments of the present disclosure."

As used herein, the term "substantially," "about," and similar terms are used as terms of approximation and not as terms of degree, and are intended to account for the inherent deviations in measured or calculated values that would be recognized by those of ordinary skill in the art. "Substantially" as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "substantially" may mean within one or more standard deviations, or within $\pm$ 30%, 20%, 10%, 5% of the stated value.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein.

The portable device, vehicle, battery, e.g., a battery controller, positive electrode or battery manufacturing device, and/or any other relevant devices or components according to embodiments of the present disclosure described herein may be implemented utilizing any suitable hardware, firmware (e.g., an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the embodiments of the present disclosure.

A person of ordinary skill in the art, in view of the present disclosure in its entirety, would appreciate that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

It will be understood that descriptions of features or aspects within each embodiment should typically be considered as available for other similar features or aspects in other embodiments, unless otherwise described. Thus, as would be apparent to one of ordinary skill in the art, features, characteristics, and/or elements described in connection with a particular embodiment may be used singly or in combination with features, characteristics, and/or elements described in connection with other embodiments unless otherwise specifically indicated. It is to be understood that the foregoing is an illustration of various example embodiments and is not to be construed as limited to the specific embodiments disclosed herein, and that various modifications to the disclosed embodiments, as well as other example embodiments, are intended to be included within the scope of the present disclosure as defined in the appended claims, and their equivalents.

Certain embodiments are set out in the following clauses:

Clause 1. A positive electrode for a rechargeable lithium battery, comprising: a current collector; a first active material layer on the current collector; and a second active material layer on the first active material layer, wherein, the first active material layer comprises a first particle, a first binder, and a first conductive material, and the second active material layer comprises a second particle, a second binder, and a second conductive material, an amount of the first binder in the first active material layer is greater than an amount of the second binder in the second active material layer, an amount of the first conductive material in the first active material layer is greater than an amount of the second conductive material in the second active material layer, and the first particle comprises a compound of Formula 1, and the second particle comprises a compound of Formula 2:

[Formula 1]           $Li_{a1}Fe_{x1}B1_{y1}PO_{4-b1}$

wherein in Formula 1 above, $0.8 \leq a1 \leq 1.2$, $0.95 \leq x1 \leq 0.999$, $0.001 \leq y1 \leq 0.05$, $0 \leq b1 \leq 0.05$, and $x1 + y1 = 1$ are satisfied, and B1 is at least one element selected from the group consisting of Ti, Mg, V, Nb, and Al, and

[Formula 2]           $Li_{a2}Fe_{x2}B2_{y2}PO_{4-b2}$

wherein in Formula 2 above, $0.8 \leq a2 \leq 1.2$, $0.95 \leq x2 \leq 0.999$, $0.001 \leq y2 \leq 0.05$, $0 \leq b2 \leq 0.05$, and $x2 + y2 = 1$ are satisfied, and B2 is at least one element selected from the group consisting of Ti, Mg, V, Nb, and Al.

Clause 2. The positive electrode of Clause 1, wherein the first binder and the second binder each comprise at least one selected from the group consisting of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon.

Clause 3. The positive electrode of Clause 1 or Clause 2, wherein the amount of the first binder is about 3 parts by weight to about 10 parts by weight with respect to 100 parts by weight of the first active material layer, and the amount of the second binder is about 2 parts by weight to about 5 parts by weight with respect to 100 parts by weight of the second active material layer.

Clause 4. The positive electrode of any preceding Clause, wherein the amount of the first conductive material is about 1 part by weight to about 5 parts by weight with respect to 100 parts by weight of the first active material layer, and the amount of the second conductive material is about 0.5 parts by weight to about 5 parts by weight with respect to 100 parts by weight of the second active material layer.

Clause 5. The positive electrode of any preceding Clause, wherein, with respect to a total weight of the first particle and the second particle, the amount of the second particle is about 10 wt% to about 50 wt%.

Clause 6. The positive electrode of any preceding Clause, wherein, with respect to a total thickness of the first active material layer and the second active material layer, the second active material layer has a thickness of about 0.1 to about 0.5.

Clause 7. The positive electrode of any preceding Clause, wherein the first particle comprises at least one first primary particle, the first primary particle has a particle diameter of about 200 nm to about 300 nm, and the first particle has an average particle diameter ($D_{50}$) of about 0.5 μm to about 2.5 μm.

Clause 8. The positive electrode of any preceding Clause, wherein the second particle comprises a plurality of second primary particles aggregated together, the second primary particles have an average particle diameter of about 100 nm to about 200 nm, and the second particle has an average particle diameter of about 3 μm to about 7 μm.

Clause 9. The positive electrode of any preceding Clause, wherein a Span value of the second particle, analyzed through a particle size analyzer, is about 0.3 to about 0.75.

## Claims

1. A positive electrode comprising:

   a current collector;
   a first active material layer on the current collector; and
   a second active material layer on the first active material layer, wherein,

   the first active material layer comprises a first particle, wherein the first particle is in the form of a single particle, in the form of single particles attached to one another, or in a combination of these forms,
   the second active material layer comprises a second particle in the form of a secondary particle,
   the first particle comprises a compound of Formula 1, and the second particle comprises a compound of Formula 2:

   Formula 1           $Li_{a1}Fe_{x1}B1_{y1}PO_{4-b1}$

   in Formula 1, $0.8 \leq a1 \leq 1.2$, $0.95 \leq x1 \leq 0.999$, $0.001 \leq y1 \leq 0.05$, $0 \leq b1 \leq 0.05$, and $x1 + y1 = 1$ are satisfied, in Formula 1, B1 is at least one element selected from the group consisting of Ti, Mg, V, Nb, and Al,

$$\text{Formula 2} \qquad Li_{a2}Fe_{x2}B2_{y2}PO_{4-b2}$$

in Formula 2, $0.8 \le a2 \le 1.2$, $0.95 < x2 \le 0.999$, $0.001 \le y2 \le 0.05$, $0 \le b2 \le 0.05$, and $x2 + y2 = 1$ are satisfied, and in Formula 2, B2 is at least one element selected from the group consisting of Ti, Mg, V, Nb, and Al, and

wherein the positive electrode is for a rechargeable lithium battery.

2. The positive electrode of claim 1, wherein, with respect to a total weight of the first particle and the second particle, the second particle is present in an amount of about 10 wt% to about 50 wt%.

3. The positive electrode of claim 1 or claim 2, wherein, with respect to a total thickness of the first active material layer and the second active material layer, the second active material layer has a thickness of about 0.1 to about 0.5.

4. The positive electrode of any preceding claim, wherein the first particle comprises at least one single particle,

the single particle has a particle diameter of about 200nm to about 300nm, and
the first particle has an average particle diameter (D50) of about 0.5 $\mu$m to about 2.5 $\mu$m.

5. The positive electrode of any preceding claim, wherein the second particle has an average particle diameter (D50) of about 3 $\mu$m to about 7 $\mu$m.

6. The positive electrode of any preceding claim, wherein,

the first particle comprises a first coating layer containing carbon, and
the first particle comprises carbon in an amount of about 0.5 wt% to about 3.0 wt%.

7. The positive electrode of claim 6, wherein,

the second particle comprises a second coating layer containing carbon,
the second particle comprises carbon in an amount of about 1 wt% to about 4 wt%, and
the amount of carbon in the second particle is greater than the amount of carbon in the first particle.

8. The positive electrode of any preceding claim, wherein the second particle has a porosity of about 20% to about 40%.

9. The positive electrode of any preceding claim, wherein,

the second particle comprises a plurality of second primary particles agglomerated together, and
the second primary particles have an average particle diameter of about 100 nm to about 200 nm.

10. The positive electrode of any preceding claim, wherein,

the first active material layer further comprises a first binder,
the second active material layer further comprises a second binder, and
a ratio of an amount of the first binder in the first active material layer to an amount of the second binder in the second active material layer is about 1.5 to about 5.

11. The positive electrode of claim 10, wherein the first binder and the second binder each comprise at least one selected from the group consisting of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinyl pyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon.

12. The positive electrode of claim 10 or claim 11, wherein,

the amount of the first binder is about 3 parts by weight to about 10 parts by weight with respect to 100 parts by weight of the first active material layer, and
the amount of the second binder is about 2 parts by weight to about 5 parts by weight with respect to 100 parts by weight of the second active material layer.

13. The positive electrode of any preceding claim, wherein,

the first active material layer further comprises a first conductive material,
and the second active material layer further comprises a second conductive material,
the amount of the first conductive material is about 1 part by weight to about 5 parts by weight with respect to 100 parts by weight of the first active material layer, and
the amount of the second conductive material is about 0.5 parts by weight to about 5 parts by weight with respect to 100 parts by weight of the second active material layer.

14. The positive electrode of any preceding claim, wherein a Span value of the second particle, analyzed through a particle size analyzer, is about 0.3 to about 0.75.

15. A rechargeable lithium battery comprising the positive electrode according to any one of claims 1 to 14.

# FIG. 1

COL1 AML1      30      COL2 AML2

10                   20

# FIG. 2

# FIG. 3

EP 4 654 299 A1

# FIG. 4

# FIG. 5

# FIG. 6

<u>10</u>

# FIG. 7

<u>ATL1</u>

FIG. 8

FIG. 9A

FIG. 9B

# FIG. 10

# EUROPEAN SEARCH REPORT

**Application Number**

EP 25 17 1386

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/361284 A1 (JI CHENG [CN] ET AL) 9 November 2023 (2023-11-09) * [0313]: tab. 10; [0262]: tab. 7; [0029]f; [0226] with [0264] * | 1-15 | INV. H01M4/58 ADD. H01M4/02 |
| A | ZHANG AILI ET AL: "Synthesis and Performance of Nb5+-Doped LiFePO4/C as Cathode Material in Lithium-Ion Battery", INTERNATIONAL JOURNAL OF ELECTROCHEMICAL SCIENCE, vol. 13, no. 6, 1 June 2018 (2018-06-01), pages 5243-5252, XP093313230, Serbia ISSN: 1452-3981, DOI: 10.20964/2018.06.07 Retrieved from the Internet: URL:https://pdf.sciencedirectassets.com/78 3334/1-s2.0-S1452398118X36001/1-s2.0-S1452 398123059643/main.pdf?hash=5c9e6571e624177 e743d5cc56891c608619be18fc823cb600204d3bf9 138360b&host=68042c943591013ac2b2430a89b27 0f6af2c76d8dfd086a07176afe7c76c2c61&pii=S1 452398123059643&tid=spdf-57d4ac5e-8bad-4b3 6-a623-ddc> * the whole document * | 1-15 | |
| A | EP 1 850 409 A1 (AQUIRE ENERGY CO LTD [TW]) 31 October 2007 (2007-10-31) * the whole document * | 1-15 | TECHNICAL FIELDS SEARCHED (IPC) H01M |
| A | US 2012/292560 A1 (TAHARA TOMOYUKI [JP] ET AL) 22 November 2012 (2012-11-22) * the whole document * | 1-15 | |

The present search report has been drawn up for all claims

| Place of search | Date of completion of the search | Examiner |
|---|---|---|
| Munich | 16 September 2025 | Radeck, Stephanie |

EPO FORM 1503 03.82 (P04C01)

## ANNEX TO THE EUROPEAN SEARCH REPORT
## ON EUROPEAN PATENT APPLICATION NO.

EP 25 17 1386

This annex lists the patent family members relating to the patent documents cited in the above-mentioned European search report.
The members are as contained in the European Patent Office EDP file on
The European Patent Office is in no way liable for these particulars which are merely given for the purpose of information.

16-09-2025

| Patent document cited in search report | | | Publication date | Patent family member(s) | | | Publication date |
|---|---|---|---|---|---|---|---|
| US 2023361284 | A1 | | 09-11-2023 | CN | 116897446 | A | 17-10-2023 |
| | | | | EP | 4280307 | A1 | 22-11-2023 |
| | | | | US | 2023361284 | A1 | 09-11-2023 |
| | | | | WO | 2023184304 | A1 | 05-10-2023 |
| EP 1850409 | A1 | | 31-10-2007 | CA | 2585594 | A1 | 25-10-2007 |
| | | | | CN | 101064367 | A | 31-10-2007 |
| | | | | EP | 1850409 | A1 | 31-10-2007 |
| | | | | HK | 1109679 | A1 | 13-06-2008 |
| | | | | JP | 5039423 | B2 | 03-10-2012 |
| | | | | JP | 2007294461 | A | 08-11-2007 |
| | | | | KR | 20070105266 | A | 30-10-2007 |
| US 2012292560 | A1 | | 22-11-2012 | CN | 102725225 | A | 10-10-2012 |
| | | | | EP | 2511233 | A1 | 17-10-2012 |
| | | | | JP | 5581065 | B2 | 27-08-2014 |
| | | | | JP | 2011146254 | A | 28-07-2011 |
| | | | | KR | 20120127438 | A | 21-11-2012 |
| | | | | US | 2012292560 | A1 | 22-11-2012 |
| | | | | WO | 2011086872 | A1 | 21-07-2011 |

EPO FORM P0459

For more details about this annex : see Official Journal of the European Patent Office, No. 12/82